(19) Europäisches Patentamt
European Patent Office
Office européen des brevets

(11) EP 0 540 466 B1

(12) EUROPÄISCHE PATENTSCHRIFT

(45) Veröffentlichungstag und Bekanntmachung des Hinweises auf die Patenterteilung:
**27.05.1998 Patentblatt 1998/22**

(51) Int Cl.[6]: **C08G 59/68**, C08G 59/72, C08L 63/00, C08F 2/48, C08J 5/24

(21) Anmeldenummer: **92810805.9**

(22) Anmeldetag: **20.10.1992**

(54) **Lösungsmittelfreie härtbare Harzzusammensetzung, insbesondere für die Herstellung von Prepregs**

Solvent-free curable resin compositions, especially for the production of prepregs

Composition de résine durcissable exempte de solvant, notamment pour la production de prepregs

(84) Benannte Vertragsstaaten:
**AT BE CH DE FR GB IT LI NL**

(30) Priorität: **28.10.1991 CH 3146/91**

(43) Veröffentlichungstag der Anmeldung:
**05.05.1993 Patentblatt 1993/18**

(73) Patentinhaber: **Ciba Specialty Chemicals Holding Inc.**
**4057 Basel (CH)**

(72) Erfinder:
- **Gruber, Urs, Dr.**
  **CH-4144 Arlesheim (CH)**
- **Manser, Aloysius Hubertus**
  **CH-4123 Allschwil (CH)**

(56) Entgegenhaltungen:
**EP-A- 0 321 407** **EP-A- 0 388 837**
**EP-A- 0 452 263**

- **IBM TECHNICAL DISCLOSURE BULLETIN Bd. 27, Nr. 5, Oktober 1984, Seite 3044 APPELT B.K. ET AL 'Composition and method of "b-staging " prepreg materials prior to final composite structures'**
- **Hawley's Condensed Chemical Dictionary; Seite 1219**
- **DIN 40804, Seite 10, Nr. 81**
- **Encyclopedia of Chemical Technology, 3rd. Ed., Vol. 15, John Wiley & Sons, Inc. (1981), Seite 621**
- **Encyclopedia of Polymer Science and Engineering, Vol. 16, John Wiley & Sons, Inc. (1989), Seite 864**
- **Kunststoffhandbuch, Bd.10 (Duroplaste), 2. Aufl. (1988), Carl Hanser Verlag; Seite 388**
- **Polymer Science Dictionary, Elsevier Applied Science, London and New York, 1989, Seiten 48 and 465**
- **Prüfung hochpolymerer Werkstoffe, Grundlagen und Prüfmethoden, Carl Hanser Verlag München Wien, 1977, Seite 304-311**
- **Encyclopedia of Polymer Science and Technology, Supplement Volume, John Wiley & Sons, Inc. (1989), Seite 702-711**
- **Encyclopedia of Polymer Science and Engineering, Vol. 6, John Wiley & Sons, Inc. (1986), Seiten 327 und 329**
- **ISO-Standards Handbook, Vol. 1, Seite 172**
- **"Duroplaste" Kunststoffhandbuch 10, Carl Hanser Verlag München Wien 1988, Seiten 426, 427**
- **ISO Standards Handbook, International Organization for Standardization, Seiten 186 bis 189**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 540 466 B1

## Beschreibung

Die vorliegende Erfindung betrifft eine im wesentlichen lösungsmittelfreie härtbare Harzzusammensetzung, insbesondere für die Herstellung von Prepregs und ein Verfahren zur Herstellung der Prepregs mit dieser Harzzusammensetzung.

Unter "Prepregs" versteht man faserverstärkte Materialien, die eine härtbare Harzzusammensetzung enthalten und mit Hilfe aktinischer Strahlung und/oder Wärme, gegebenenfalls in Kontakt mit geeigneten weiteren Materialien zu einem Verbundmaterial verarbeitet werden können.

Aus der EP-A-0 323 584 ist es bekannt, Prepregs herzustellen, indem man ein faserförmiges Trägermaterial entweder mit einer flüssigen, lösungsmittelfreien härtbaren Mischung, die ein Epoxidharz und eine Verbindung der Formel I als Härter

$$\left[ R^1 \left( Fe^{II} \; R^2 \right)_a \right]^{ab\oplus} \quad ab \cdot \left[ X \right]^{\ominus} \qquad (I)$$

enthält, oder mit der Lösung einer entsprechenden festen Mischung in einem inerten Lösungsmittel in innigen Kontakt bringt und das mit der härtbaren Mischung getränkte Fasermaterial gegebenenfalls trocknet. Danach können die Prepregs zu Verbundkörpern weiterverarbeitet werden, wobei die härtbare Mischung, nachdem sie bevorzugt zunächst aktinischer Strahlung ausgesetzt wurde, durch Anwendung von Wärme ausgehärtet werden muss. In Formel I sind a und b unabhängig voneinander 1 oder 2, $R^1$ ist ein $\pi$-Aren, $R^2$ ein $\pi$-Aren, ein Indenylanion oder ein Cyclopentadienylanion bedeutet, $[X]^{\ominus}$ ist ein Anion $[LQ_m]^{\ominus}$ oder ein Anion einer teil- oder perfluorierten aliphatischen oder aromatischen Sulfonsäure, L steht für B, P, As oder Sb, Q steht für F, wobei ein Teil der Reste Q auch Hydroxylgruppen sein können, und m entspricht der um Eins vergrösserten Wertigkeit von L.

Ein wesentlicher Nachteil hierbei ist, dass feste Mischungen, mit denen trockene und damit auch längerfristig lagerfähige Prepregs herstellbar sind, mit Hilfe eines inerten organischen Lösungsmittels als Träger appliziert werden, was entsprechenden Aufwand zur sachgerechten und insbesondere emissionslosen Trocknung der Prepregs erfordert. Die offenbarten flüssigen, lösungsmittelfreien Mischungen, wie sie z. B. gemäss den Ausführungsbeispielen 6 und 8 der betrachteten Patentanmeldung verwendet werden, sind dagegen nur für eine kontinuierliche Verfahrensweise geeignet, bei der das mit der härtbaren Mischung getränkte Fasermaterial praktisch sofort zum Verbundmaterial weiterverarbeitet wird. Diese flüssigen Mischungen erlauben aber nicht die Herstellung trockener Prepregs, da hierzu die flüssige, dem Fasermaterial anhaftende härtbare Harzzusammensetzung durch teilweise Vorvernetzung erst in einen festen Zustand überführt werden müsste. Eine solche Vorvernetzung, die in der Prepregtechnologie unter dem Namen "B-Stufenbildung" ebenfalls bekannt ist, würde aber den Einsatz eines zweiten Härters mit anderer Reaktivität erfordern. Darüberhinaus ist es bis heute nur mit grossem Aufwand möglich, die B-Stufenbildung so zu steuern, dass Prepregs mit wirklich reproduzierbaren Eigenschaften erhalten werden.

Ein zusätzlicher Nachteil der oben beschriebenen Zusammensetzungen ist, dass sie bei der Wärmebehandlung relativ hohe Temperaturen für eine ausreichende Aushärtung benötigen. So erfordern diese Zusammensetzungen selbst nach Behandlung mit aktinischer Strahlung, was in aller Regel zu einer Reduzierung der Härtungstemperatur führt, immer noch Temperaturen im Bereich von 170 bis 180 °C für eine gute Durchhärtung. Die Anwendung solch hoher Temperaturen hat unter anderem aber einen sehr hohen Energieverbrauch zur Folge oder schliesst z. B. die Verwendung thermisch weniger stabiler Materialien als Bestandteile von Verbundkörpern aus, wenn die Körper unter Verwendung der genannten Prepregs hergestellt werden sollen.

Aus der EP-A-0 321 407 sind thermisch härtbare Zusammensetzungen auf Basis von Epoxidharz und einer Verbindung der Formel I in der oben angegebenen Bedeutung bekannt, die -nach Aktivierung durch aktinische Strahlung- auch bei wesentlich niedrigerer Temperatur als 170 bis 180 °C gehärtet werden können, z. B. bei 100 °C. Diese Zusammensetzungen enthalten zusätzlich zu den genannten Komponenten noch einen mit durchschnittlich zwei Carboxylgruppen pro Molekül terminierten flexiblen Polyester und eignen sich als Klebstoffe und Beschichtungsmittel. Bevorzugt sind hierbei Zusammensetzungen, die flüssige Epoxidharze im Gemisch mit festen oder halbfesten Epoxidharzen enthalten. Als Applikationsmethode ist der Druckschrift nur die Verwendung der Zusammensetzungen in flüssiger bzw. in Form einer Lösung entnehmbar, deren Nachteile oben schon genannt wurden.

Aufgabe der vorliegenden Erfindung ist es, die oben geschilderten Nachteile des Standes der Technik zu beheben, d. h. die Herstellung von klebfreien oder annähernd klebfreien und lange lagerfähigen Prepregs, die sich darüberhinaus bei Temperaturen unter ca. 140 °C in üblicher Zeit so aushärten lassen, dass Verbundkörper mit guten anwendungstechnischen Eigenschaften erhalten werden, ohne den Einsatz von Lösungsmitteln und/oder die Notwendigkeit einer teilweisen Aushärtung bis zur B-Stufe zu ermöglichen.

Die vorliegende Erfindung betrifft daher eine härtbare Harzzusammensetzung mit weniger als 2 Gewichstprozent

an Lösungsmittel für die Herstellung von Prepregs, die einen Anteil von mehr als 45 Gewichtsprozent (Gew.-%) an zumindest bei Raumtemperatur festen Stoffen aufweist und die neben üblichen Zusatzstoffen aus festen Epoxidharzen oder einem Gemisch flüssiger und fester Epoxidharze, zumindest einer für UV-Strahlung empfindlichen Initiatorverbindung für die Polymerisation der Epoxidharze und zumindest einer weiteren Verbindung besteht, die eine oder mehrere Carboxylgruppen aufweist, wobei die Initiatorverbindung für die Polymerisation der Epoxidharze die Formel I aufweist:

$$[R^1(Fe^{II}R^2)_a]^{ab+}\ ab[X]^- \qquad (I)$$

worin a und b unabhängig voneinander 1 oder 2 sind, $R^1$ ein $\pi$-Aren ist, $R^2$ ein $\pi$-Aren, ein Indenylanion oder ein Cyclopentadienylanion bedeutet, $[X]^-$ ein Anion $[LQ_m]^-$ oder ein Anion einer teil- oder perfluorierten aliphatischen oder aromatischen Sulfonsäure ist L für B, P, As oder Sb steht, Q für F steht, wobei ein Teil der Reste Q auch Hydroxylgruppen sein können, und m der um Eins vergrösserten Wertigkeit von L entspricht, der Anteil fester Epoxidverbindungen, bezogen auf das Gesamtgewicht der Epoxidharze in der Zusammensetzung 50 Gewichtsprozent beträgt oder grösser als 50 Gewichtsprozent ist und die Zusammensetzung durch Erwärmung auf eine Temperatur im Bereich von 60 bis 140 °C unter UV-Ausschluss und, ohne dass ihr ein Lösungsmittel zugegeben wird, in einen Zustand überführbar ist in dem sie eine Viskosität von höchstens 3500 mPa.s aufweist, und die aus diesem Zustand durch Abkühlung bis höchstens zu Raumtemperatur und unter UV-Ausschluss in eine noch ungehärtete, bei Raumtemperatur klebfreie oder annähernd klebfreie, feste Masse mit einem Erweichungspunkt von minus 3 °C und höher, überführbar ist.

Die erfindungsgemässen Zusammensetzungen enthalten praktisch kein Lösungsmittel, mit Ausnahme von sehr geringen Mengen (unter ca. 2 Gew.-%) an Lösungsmittel, die oftmals nicht vermieden werden können, z. B. weil sie durch solche Zusatzstoffe eingeschleppt werden, die üblicherweise in gelöster Form erhältlich sind, wie Netzmittel.

Die Viskosität der Zusammensetzungen beträgt im allgemeinen höchstens 3500 mPa·s, da die Zusammensetzung in diesem Zustand, gegebenenfalls unter Druckanwendung, ein Fasermaterial, das üblicherweise für Prepregs Anwendung findet, z. B. Glasfasergewebe, ohne weiteres durchdringen kann. Bevorzugt sind Zusammensetzungen, die durch Erwärmung auf eine Temperatur im Bereich zwischen 60 und 140 °C in einen Zustand überführbar sind, in dem sie eine Viskosität von höchstens 1200 mPa·s, insbesondere von höchstens 600 mPa·s aufweisen. Die Zusammensetzungen sollten allerdings bei 60 °C auch noch nicht zu dünnflüssig sein. Bevorzugt ist eine Untergrenze für die Viskosität von 200, insbesondere von 400 mPa·s.

Mit "Raumtemperatur" ist die am Verwendungsort der Zusammensetzung ohne den Einsatz einer speziellen Kühlapparatur herrschende Temperatur gemeint. Sie wird im allgemeinen zwischen 10 und 25 °C liegen.

"Bei Raumtemperatur klebfreie oder annähernd klebfreie Masse" bedeutet, dass die Massen zwar leicht klebrig sein können und im allgemeinen auch sind, jedoch nur so wenig, dass sie leicht wieder von einem Substrat, an dem sie anhaften, abgezogen werden können. Leichte Klebrigkeit ist oftmals sogar erwünscht, da Prepregs aus solchem Material in noch ungehärtetem Zustand besonders einfach in einer gewünschten Form fixierbar sind. Der Erweichungspunkt der Massen liegt bevorzugt über 0 °C.

Als Epoxidharze eignen sich für die erfindungsgemässen Zusammensetzungen in der Regel alle Epoxidharze mit durchschnittlich mindestens zwei 1,2-Epoxidgruppen im Molekül. N-Glycidylverbindungen beeinträchtigen jedoch sehr stark die Wirkung der Initiatorverbindungen der Formel I (Katalysatorgift) und sind daher nur wenig oder gar nicht geeignet. Aufgrund toxikologischer Gesichtspunkte sind Triglycidylisocyanurat und Epoxidharze, die Epoxidgruppen innerhalb cycloaliphatischer Ringe enthalten, wie z. B. Bis-(2,3-epoxicyclopentyl)ether, und in Verbindung mit Epoxidharzen auf Basis von Bisphenol A eingesetzt werden, weniger bevorzugt.

Gut geeignete Epoxidharze für die Erfindung sind beispielsweise:

I) Polyglycidyl- und Poly-($\beta$-methylglycidyl)-ester erhältlich durch Umsetzung einer Verbindung mit mindestens zwei Carboxylgruppen im Molekül und Epichlorhydrin bzw. Glycerindichlorhydrin bzw. $\beta$-Methylepichlorhydrin. Die Umsetzung erfolgt zweckmässig in der Gegenwart von Basen. Als Verbindung mit mindestens zwei Carboxylgruppen im Molekül können aliphatische, cycloaliphatische oder aromatische Polycarbonsäuren verwendet werden. Beispiele für diese Polycarbonsäuren sind weiter unten als Bildungskomponenten von für die Erfindung geeigneten Polyestern aufgeführt.

II) Polyglycidyl- oder Poly-($\beta$-methylglycidyl)-ether erhältlich durch Umsetzung einer Verbindung mit mindestens zwei freien alkoholischen Hydroxylgruppen und/oder phenolischen Hydroxygruppen und einem geeignet substituierten Epichlorhydrin unter alkalischen Bedingungen, oder in Anwesenheit eines sauren Katalysators und anschliessender Alkalibehandlung. Ether dieses Typs leiten sich beispielsweise ab von acyclischen Alkoholen mit mindestens 3, bevorzugt mindestens 6 Kohlenstoffatomen, z. B. von Poly-(oxyethylen)-glykolen, Poly-(oxypropylen)-glykolen, Butan-1,4-diol, Poly-(oxytetramethylen)-glykolen, Hexan-1,6-diol, Hexan-2,4,6-triol, Glycerin, 1,1,1-Trimethylolpropan, Pentaerythrit, Sorbit, sowie von Polyepichlorhydrinen. Sie leiten sich aber auch beispielsweise ab von cycloaliphatischen Alkoholen wie 1,3- oder 1,4-Dihydroxycyclohexan, Bis-(4-hydroxycyclohexyl)-methan, 2,2-Bis(4-hydroxycyclohexyl)-propan oder 1,1-Bis-(hydroxymethyl)-cyclohex-3-en.

Die Epoxidverbindungen können sich auch von einkernigen Phenolen ableiten, wie beispielsweise von Resorcin oder Hydrochinon; oder sie basieren auf mehrkernigen Phenolen wie beispielsweise auf Bis-(4-hydroxyphenyl)-methan (Bisphenol F), 4,4'-Dihydroxydiphenyl, Bis-(4-hydroxyphenyl)-sulfon, 1,1,2,2-Tetrakis-(4-hydroxyphenyl)-ethan, 2,2-Bis-(4-hydroxyphenyl)-propan (Bisphenol A),2,2-Bis-(3,5-dibrom-4-hydroxyphenyl)-propan sowie auf Novolaken erhältlich durch Kondensation von Aldehyden, wie beispielsweise Formaldehyd, Acetaldehyd, Chloral oder Furfuraldehyd mit Phenolen, wie insbesondere Phenol oder Kresol, oder mit Phenolen, die im Kern mit Chloratomen oder $C_1$-$C_9$Alkylgruppen substituiert sind, wie beispielsweise 4-Chlorphenol, 2-Methylphenol oder 4-tert.Butylphenol oder erhältlich durch Kondensation mit Bisphenolen, so wie oben beschrieben.

III) Poly-(S-glycidyl) Verbindungen, insbesondere Di-S-glycidylderivate, die sich von Dithiolen oder Bis-(4-mercaptomethylphenyl)-ether ableiten.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise der Glycidylether-glycidylester der Salicylsäure.

Diese Epoxidharze sind an sich bekannt oder können nach bekannten Verfahren hergestellt werden.

Die erfindungsgemässen Mischungen enthalten im allgemeinen 60 bis 98 Gew.-% Epoxidharze, insbesondere 75 bis 98 Gew.-%, z. B. 80 bis 90 Gew.-%. Der Anteil feste Epoxidharze ist dabei 50 Gew.-%, bezogen auf das Gesamtgewicht der Epoxidharze, und grösser, z. B. grösser als 60 Gew.-% oder 70 Gew.-%. Man kann auch nur feste Epoxidharze verwenden, wenn diese eine genügend tiefe Erweichungstemperatur (im allgemeinen unter 140 °C) haben.

Ein Gemisch flüssiger und fester Epoxidharze, das einen Bestandteil der erfindungsgemässen Zusammensetzungen bildet, kann die Mischung eines oder mehrerer flüssiger Epoxidharze mit einem oder mehreren festen Epoxidharzen sein.

Besonders bevorzugt sind Zusammensetzungen, die als flüssige Epoxidharze entweder Glycidylester enthalten oder Diglycidylether, die sich von Bisphenol A oder Bisphenol F herleiten. Ebenfalls bevorzugt sind Zusammensetzungen, die als feste Epoxidharze Polyglycidylether enthalten, die sich von Bisphenol A, Bisphenol F oder von Epoxynovolaken, insbesondere von Epoxyphenol- und Epoxycresolnovolaken, herleiten.

Für die Verbindungen der Formel I kommen als $\pi$-Arene $R^1$ und $R^2$ mit Vorzug carbocyclisch-aromatische Kohlenwasserstoffe mit 6 bis 24 Kohlenstoffatomen, insbesondere mit 6 bis 12 Kohlenstoffatomen, oder heterocyclisch-aromatische Kohlenwasserstoffe mit 4 bis 11 Kohlenstoffatomen und ein oder zwei S- und/oder O-Atomen in Betracht, wobei diese Gruppen gegebenenfalls durch gleiche oder verschiedene einwertige Reste, wie Halogenatome, vorzugsweise Chlor- oder Bromatome, oder $C_1$-$C_8$-Alkyl, $C_1$-$C_8$-Alkoxy- oder Phenylgruppen einfach oder mehrfach, vorzugsweise ein- oder zweifach, substituiert sein können. Diese $\pi$-Arengruppen können einkernige, kondensierte mehrkernige oder unkondensierte mehrkernige Systeme darstellen, wobei in den zuletzt genannten Systemen die Kerne direkt oder über Brückenglieder, wie $-CH_2-$, $-C(CH_3)_2-$, -O-, -S-, $-SO_2-$, -CO- oder -CH=CH-, verknüpft sein können. $R^2$ kann auch ein Indenylanion und insbesondere ein Cyclopentadienylanion sein, wobei auch diese Anionen gegebenenfalls durch gleiche oder verschiedene einwertige Reste, wie oben als Substituenten für $\pi$-Arene erwähnt, einfach oder mehrfach, vorzugsweise ein- oder zweifach substituiert sein können. Die Alkyl- oder Alkoxysubstituenten können dabei geradkettig oder verzweigt sein. Als typische Alkyl- oder Alkoxysubstituenten seien Methyl, Ethyl, n-Propyl, Isopropyl, n-Butyl, sek.-Butyl, tert.-Butyl, n-Pentyl, n-Hexyl und n-Octyl, Methoxy, Ethoxy, n-Propoxy, Isopropoxy, n-Butoxy, n-Hexyloxy und n-Octyloxy genannt. Dabei sind Alkyl- und Alkoxygruppen mit 1 bis 4 und insbesondere 1 oder 2 Kohlenstoffatomen in den Alkylteilen bevorzugt. Als substituierte $\pi$-Arene oder substituierten Indenyl- oder Cyclopentadienylanionen werden solche bevorzugt, die einen oder zwei der obengenannten Substituenten, insbesondere Methyl-, Ethyl-, n-Propyl, Isopropyl, Methoxy-oder Ethoxygruppen, enthalten. Als $R^1$ und $R^2$ können gleiche oder verschiedene $\pi$-Arene vorliegen.

Beispiele für geeignete $\pi$-Arene sind Benzol, Toluol, Xylole, Ethylbenzol, Cumol, Methoxybenzol, Ethoxybenzol, Dimethoxybenzol, p-Chlortoluol, m-Chlortoluol, Chlorbenzol, Brombenzol, Dichlorbenzol, Trimethylbenzol, Trimethoxybenzol, Naphthalin, 1,2-Dihydronaphthalin, 1,2,3,4-Tetrahydronaphthalin, Methylnaphthalin, Methoxynaphthalin, Ethoxynaphthalin, Chlornaphthalin, Bromnaphthalin, Biphenyl, Stilben, Inden, 4,4'-Dimethylbiphenyl, Fluoren, Phenanthren, Anthracen, 9,10-Dihydroanthracen, Triphenyl, Pyren, Perylen, Naphthacen, Coronen, Thiophen, Chromen, Xanthen, Thioxanthen, Benzofuran, Benzothiophen, Naphthothiophen, Thianthren, Diphenylenoxyd und Diphenylensulfid.

Beispiele für Anionen substituierter Cyclopentadiene sind die Anionen des Methyl-, Ethyl-, n-Propyl- und n-Butylcyclopentadiens oder die Anionen des Dimethylcyclopentadiens. Bevorzugte Anionen sind das Anion des unsubstituierten Indens und insbesondere des unsubstituierten Cyclopentadiens.

Der Index a ist vorzugsweise 1. Der Index b ist vorzugsweise 1. Wenn a 2 ist, stellt $R^2$ vorzugsweise je das gegebenenfalls substituierte Indenylanion oder insbesondere das Cyclopentadienylanion dar.

$X^{\ominus}$ ist bevorzugt das Anion einer perfluoraliphatischen oder perfluoraromatischen Sulfonsäure und ganz besonders $[LQ_m]^{\ominus}$, wie oben definiert.

Beispiele für Anionen perfluoraliphatischer oder perfluoraromatischer Sulfonsäuren sind $CF_3SO_3^{\ominus}$, $C_2F_5SO_3^{\ominus}$, n-$C_3F_7SO_3^{\ominus}$, n-$C_4F_9SO_3^{\ominus}$, n-$C_6F_{13}SO_3^{\ominus}$, n-$C_8F_{17}SO_3^{\ominus}$ , $C_6F_5SO_3^{\ominus}$ und $CF_3C_6F_4SO_3^{\ominus}$. Bevorzugt ist $CF_3SO_3^{\ominus}$.

Beispiele für besonders bevorzugte Anionen $[LQ_m]^{\ominus}$ sind $PF_6^{\ominus}$, $AsF_6^{\ominus}$, $SbF_6^{\ominus}$ und $SbF_5(OH)^{\ominus}$. Ganz besonders bevorzugt werden $PF_6^{\ominus}$, $SbF_6^{\ominus}$, insbesondere $SbF_6^{\ominus}$. Zusammensetzungen, die Verbindungen der Formel I mit $SbF^{\ominus}_6$ als Anion enthalten, lassen sich nach deren Deblockierung durch Bestrahlung bereits bei sehr niedrigen Temperaturen aushärten.

Die Verbindungen der Formel I sind an sich bekannt oder können in Analogie zu bekannten Verbindungen hergestellt werden. Die Herstellung der Salze mit $X^{\ominus} = [LQ_m]^{\ominus}$ ist beispielsweise in der EP-A-94,915 beschrieben. Verbindungen der Formel I mit anderen Anionen lassen sich in Abweichung zu den dort beschriebenen Verfahren herstellen, indem man anstelle eines Anions einer komplexen Säure ein anderes Anion der Säure HX in an sich bekannter Weise einführt; dabei besitzt X die oben definierte Bedeutung.

In manchen Fällen kann es besonders günstig sein, erfindungsgemässe Zusammensetzungen einzusetzen, die mehr als eine Eisenarenverbindung der Formel I enthalten, wobei diese Verbindungen z. B. jeweils unterschiedliche Anionen $[X^{\ominus}]$ aufweisen. Beispiele hierfür sind Gemische von Eisenarensalzen auf Basis der Anionen $SbF_6^{\ominus}$ und $CF_3SO_3^{\ominus}$ sowie insbesondere auf Basis von $PF_6^{\ominus}$ und $SbF_6^{\ominus}$. Mit solchen Gemischen können beispielsweise die Härtungsbedingungen von erfindungsgemässen Zusammensetzungen und die Eigenschaften von Härtungsprodukten, die mit Hilfe der Zusammensetzungen hergestellt werden, optimal gesteuert werden.

Der Gesamtgehalt der Zusammensetzungen an Verbindungen der Formel I liegt gewöhnlich zwischen 0,5 und 10 Gew.-%, bevorzugt zwischen 1 und 5 Gew.-%.

Als Verbindungen, die eine oder mehrere Carboxylgruppen aufweisen, kommen z. B. übliche niedermolekulare Carbonsäuren in Frage. Die Carbonsäuren können bei Raumtemperatur fest und flüssig sein. Sie weisen bevorzugt ein Molekulargewicht von 45 bis 250 g pro Carboxyläquivalent, insbesondere von 45 bis 100 g auf. Geeignet sind z. B. Milchsäure (bei Raumtemperatur flüssig) oder Benzoesäure, Salicylsäure, Oxalsäure, Malonsäure, Bemsteinsäure, Glutarsäure, Adipinsäure, Pimelinsäure, Äpfelsäure, Weinsäure, Maleinsäure, Fumarsäure. Besonders bevorzugt sind Milchsäure, Adipinsäure und Fumarsäure.

Ebenfalls gut geeignet sind freie Carboxylgruppen aufweisende, insbesondere mit durchschnittlich mindestens zwei Carboxylgruppen terminierte Polyester, wie sie z. B. in der EP-A-0 321 407 beschrieben sind. Die letztgenannten Polyester führen nämlich unter anderem auch zu stark verbesserten Klebeeigenschaften. Die Polyester können bei Raumtemperatur flüssig oder halbfest oder fest sein. Die Polyester können amorph oder teilkristallin sein. Ihr Erweichungspunkt liegt vorzugsweise unterhalb von 100°C und sie besitzen in der Regel Molekulargewichte (Zahlenmittel) von 250 bis 15000, vorzugsweise von 500 bis 2500. Ihre Säurezahl beträgt in der Regel 0,1 bis 5 Aequ./kg, vorzugsweise 0,1 bis 2,0 Aequ./kg. Die Viskosität (nach Epprecht) dieser Polyester ist in der Regel kleiner als 2000 mPa·s (bei 80°C).

Die Polyester leiten sich von aliphatischen oder cycloaliphatischen Polyolen und aliphatischen, cycloaliphatischen oder aromatischen Polycarbonsäuren ab.

Im Fall der Polyole setzt man bevorzugt niedermolekulare und präpolymere Aufbaukomponenten ein.

Beispiele für niedermolekulare aliphatische Diole sind $\alpha,\omega$-Alkylendiole, wie Ethylenglykol, Propan-1,2-diol, Propan-1,3-diol, Butan-1,4-diol, Pentan-1,5-diol, Neopentylglykol, Hexan-1,6-diol, Octan-1,8-diol, Decan-1,10-diol oder Dodecan-1,12-diol. Beispiele für niedermolekulare cycloaliphatische Diole sind 1,3- oder 1,4-Dihydroxycyclohexan, 1,4-Cyclohexandimethanol, Bis-(4-hydroxycyclohexyl)-methan oder 2,2-Bis-(4-hydroxycyclohexyl)-propan. Beispiele für niedermolekulare höherfunktionelle Alkohole sind 1,1,1-Trimethylolethan, 1,1,1-Trimethylolpropan, Glycerin, Pentaerithrit oder 1,3,5-Trihydroxybenzol.

Unter präpolymeren Aufbaukomponenten versteht man im allgemeinen hydroxyl-terminierte Präpolymere mit wenigstens zwei wiederkehrenden flexibilisierenden Strukturkomponenten. Beispiele dafür sind hydroxyl-terminierte Polyether auf Basis von Polypropylen- und Polybutylenglykol sowie hydroxylterminierte Polycaprolactone. Das Molekulargewicht (Zahlenmittel) dieser Präpolymere beträgt im allgemeinen 150-4000, bevorzugt 500-2500. Präpolymere Aufbaukomponenten können di- oder höherfunktionell sein, vorzugsweise di- oder trifunktionell. Niedermolekulare Aufbaukomponenten sind oftmals difunktionell. Die Polyester können aber auch niedermolekulare, höherfunktionelle Aufbaukomponenten enthalten, bevorzugt in geringer Menge. Bei allen diesen Ausführungsformen sind Art, Funktionalität und Menge höherfunktioneller Komponenten so zu wählen, dass ein Polyester mit den oben angegebenen Spezifikationen entsteht.

Beispiele für geeignete hydroxyl-terminierte Präpolymere mit mindestens zwei wiederkehrenden flexibilisierenden Struktureinheiten sind Polyether, Polyester oder Polythioether, sofern diese Verbindungen hydroxyl-terminiert sind. Beispiele für hydroxyl-terminierte Polyether sind Polyalkylenetherpolyole, die durch ionische Polymerisation, Copolymerisation oder Blockcopolymerisation von Alkylenoxiden, wie Ethylenoxid, Propylenoxid oder Butylenoxid, gegebenenfalls in Gegenwart von di- oder polyfunktionellen Alkoholen, wie Butan-1,4-diol, 1,1,1-Trimethylolethan, 1,1,1-Trimethylolpropan, Hexan-1,2,6-triol, Glycerin, Pentaerithrit oder Sorbit, oder von Aminen, wie Methylamin, Ethylendiamin oder Hexan-1,6-diamin, oder durch ionische Polymerisation oder Copolymerisation cyclischer Ether, wie Tetrahydrofuran, Ethylenoxid oder Propylenoxid mit sauren Katalysatoren, wie $BF_3$·Etherat oder durch Polykondensation von unter Wasserabspaltung polykondensierbaren Glykolen, wie Hexan-1,6-diol, in Gegenwart saurer Veretherungskatalysatoren, wie p-Toluolsulfonsäure, erhalten werden. Ferner kann man auch Oxalkylierungsprodukte von Phosphorsäure oder phosphoriger Säure mit Ethylenoxid, Propylenoxid oder Butylenoxid verwenden. Beispiele für hydroxylterminierte Polyesterpolyole sind Verbindungen, die sich von Di- und/oder Polycarbonsäuren und Di- und/oder Polyolen, bevorzugt von Dicarbonsäuren und Diolen ableiten. Beispiele für geeignete Polyole und Polycarbonsäuren sind die hierin als Aufbaukomponenten für die Polyester aufgezählten. Weitere Beispiele für geeignete hydroxyl-terminierte Präpolymere sind Polymerisationsprodukte von Lactonen, beispielsweise von ε-Caprolactonen; oder Polyalkylenthioetherpolyole, beispielsweise die Polykondensationsprodukte des Thiodiglykols mit sich und mit Diolen und/oder Polyolen, wie beispielsweise Hexan-1,6-diol, Triethylenglykol, 2,2-Dimethyl-1,3-propandiol oder 1,1,1-Trimethylolpropan. Diese Verbindungen sind dem Fachmann an sich bekannt. Sie können linear oder verzweigt sein; bevorzugt werden die linearen Typen.

Beispiele für aliphatische Dicarbonsäuren, die als Aufbaukomponente für erfindungsgemäss geeignete Polyester verwendet werden können, sind gesättigte aliphatische Dicarbonsäuren, wie Oxalsäure, Malonsäure, Bernsteinsäure, α-Methylbernsteinsäure, Glutarsäure, Adipinsäure, Pimelinsäure, Azelainsäure, Sebazinsäure oder dimerisierte Linolsäure; oder ungesättigte aliphatische Polycarbonsäuren, wie Maleinsäure, Fumarsäure, Mesaconsäure, Citraconsäure, Glutaconsäure oder Itaconsäure, sowie mögliche Anhydride dieser Säuren. Beispiele für cycloaliphatische Dicarbonsäuren sind Hexahydrophthal-, Hexahydroisophthal- oder Hexahydroterephthalsäure, Tetrahydrophthal-, Hexahydroisophthal- oder Hexahydroterephthalsäure oder 4-Methyltetrahydrophthalsäure, 4-Methylhexahydrophthalsäure oder Endomethylentetrahydrophthalsäure. Beispiele für aromatische Dicarbonsäuren sind Phthal-, Isophthal- und Terephthalsäure. Beispiele für höherfunktionelle Carbonsäuren sind aromatische Tri- oder Tetracarbonsäuren, wie Trimellitsäure, Trimesinsäure, Pyromellitsäure oder Benzophenontetracarbonsäure; oder trimerisierte Fettsäuren oder Gemische von dimerisierten und trimerisierten Fettsäuren, wie sie beispielsweise unter der Bezeichnung Pripol® im Handel sind.

Bevorzugt als Polyol sind Hexandiol, Neopentylglykol oder Cyclohexandimethanol oder Kombinationen davon. Bevorzugte Polycarbonsäuren sind α,ω-Dicarbonsäuren mit aliphatischen Segmenten wie z.B. Adipin- oder Sebazinsäure.

Die Herstellung der Polyester erfolgt in an sich bekannter Weise durch Umsetzung der Polyolkomponente(n) mit einem Ueberschuss an Polycarbonsäurekomponente(n). Anstelle der Polycarbonsäure kann man auch ein polyesterbildendes Derivat einsetzen, beispielsweise ein Anhydrid. Bei einer anderen Herstellungsweise kondensiert man Polyol und Polycarbonsäure(derivat), wobei das Polyol im Ueberschuss eingesetzt wird. Das entstandene Präpolymere mit Hydroxylgruppen wird dann mit Carbonsäureanhydriden zum carboxyl-terminierten Polyester verkappt. Man kann auch von den anderen, weiter oben beschriebenen hydroxylterminierten Präpolymeren ausgehen, und diese mit geeigneten Carbonsäureanhydriden verkappen.

Die Polyesterharze können durch allgemeine Arbeitsweise, die bei der Herstellung solcher Harze Anwendung finden, hergestellt werden. So kann man zweckmässigerweise die Veresterung durch Schmelzkondensation der Carbonsäurekomponente(n) und des Diols durchführen. Die Reaktionsteilnehmer werden dabei beispielsweise unter Rühren auf Temperaturen bis zu 250°C erhitzt. Dabei kann es sich anbieten, ein inertes Gas, wie beispielsweise Stickstoff, durch die Reaktionsmischung zu leiten, um das während der Veresterungsreaktion gebildete Wasser zu entfernen. Auch kann am Ende der Veresterungsreaktion gegebenenfalls ein leichtes Vakuum angelegt werden, um restliche niedermolekulare Spaltprodukte zu isolieren. Der bevorzugte Temperaturbereich der Schmelzkondensation beträgt 160-250°C. Man kann aber auch andere Formen der Polykondensation anwenden, beispielsweise die Grenzflächenpolykondensation, die Polykondensation in Lösung, in Suspension oder in Masse. Die Kondensation von Polycarbonsäuren und/oder Polyolen mit Funktionalitäten grösser als zwei erfolgt in dem Fachmann an sich bekannter Weise unter Bedingungen und mit stöchiometrischen Verhältnissen, so dass eine Gelierung verhindert und eine Verzweigung des Polyesters bewirkt wird.

Die erfindungsgemässen Zusammensetzungen enthalten im allgemeinen 0,2 bis 25 Gew.-% der Verbindungen, die eine oder mehrere Carboxylgruppen aufweisen. Für niedermolekulare Carbonsäuren, wie sie z. B. vorne genannt wurden, reichen bereits 10 Gew.-% in praktisch allen Fällen aus. Bevorzugt wird in diesem Fall ein Gehalt von 0,5 bis 5 Gew.-%. Von höhermolekularen Verbindungen, wie den beschriebenen Polyestern, müssen in der Regel grössere Mengen verwendet werden, da diese Verbindungen meist weniger Carboxyläquivalente, bezogen auf die eingesetzte Menge der Verbindungen, enthalten. Bevorzugt wird in diesen Fällen ein Gehalt von 10 bis 25 Gew.-%.

Die härtbaren Zusammensetzungen können auch weitere, bekannte und üblicherweise in der Technik strahlungs- und/hitzehärtbarer Materialien eingesetzte Zusatzstoffe enthalten. Beispiele für solche Zusatzstoffe sind Pigmente,

Farbstoffe, Flammhemmstoffe, Antistatika, Verlaufmittel, Antioxydantien, Haftvermittler, Weichmacher, Netzmittel, Thixotropiemittel, Lichtschutzmittel, in manchen Fällen auch Füllstoffe.

Einen weiteren Gegenstand der Erfindung bilden ein Verfahren zur Herstellung von Prepregs unter Verwendung der oben beschriebenen Zusammensetzungen.

Bei dem Verfahren erhitzt man eine der erfindungsgemässen Zusammensetzungen unter Ausschluss von UV-Strahlung auf eine Temperatur, die zwischen 60 und 140 °C liegt und mindestens so hoch ist, dass die Zusammensetzung eine Viskosität von höchstens etwa 3500 mPa·s, bevorzugt höchstens 1200 mPa·s, aufweist, bringt die Zusammensetzung unter weiterem UV-Ausschluss in diesem Zustand mit einem faserförmigen Material in innigen Kontakt, kühlt das so behandelte Fasermaterial unter UV-Strahlungsausschluss zumindest auf eine Temperatur ab, bei der die härtbare Mischung erstarrt, und aktiviert das erhaltene Material danach entweder nach einer Zwischenlagerung unter UV-Ausschluss oder sofort durch Belichtung mit UV-Strahlung.

Als faserförmige Materialien sind im Prinzip alle Fasern geeignet, die mit der Epoxidmatrix einen Verbund ausbilden können und eine Verstärkung des Matrixmaterials bewirken. Beispiele für Fasermaterialien sind natürliche Polymere, wie Cellulose; Metallfasern, z. B. aus Stahl, Ti, W, Ta oder Mo; Glas- und Keramikfasern; organische faserbildende Polymere, insbesondere aromatische Polyamide, wie Nomex oder Kevlar; aber auch Kohlefasern, wie z.B. durch Carbonisieren von Cellulose, Polyacrylnitril oder Pech hergestellte Materialien.

Die Fasermaterialien können in unterschiedlichsten Formen als Träger eingesetzt werden. Sie lassen sich beispielsweise als Endlosfäden (einzelne Fäden oder Spinnfäden), Endlosgarne, Parallelrovings, als gewebte Endlosgarne, Spinnrovings, Rovinggewebe, Kurzfasern, Endlosmatten, Schnittmatten, Vliesstoffe oder Filze (Papiere) verwenden.

Das Kontaktieren des faserförmigen Materials mit der härtbaren Harzzusammensetzung wird je nach Fasertyp und Faserform unterschiedlich sein. So können beispielsweise Prepregs, die Kurzfasern enthalten, durch Aufbringen der fliessfähig erhitzten, härtbaren Zusammensetzung zusammen mit geschnittenen Fasern auf ein Gewebe oder eine Metallfolie hergestellt werden. Auch kann ein bevorzugt flexibler Träger zunächst mit der heissen, fliessfähigen Mischung beschichtet werden und das Fasermaterial kann an einer späteren Stelle, wo die Beschichtung noch fliessfähig genug ist, z. B. mit einer Presswalze der Beschichtung einverleibt werden, wonach der Träger gegebenenfalls wieder entfernt wird. Auch ein Rakelauftrag ist möglich. Hierfür und für ähnliche Auftragsarten beträgt die Viskosität der heissen erfindungsgemässen Zusammensetzungen vorzugsweise 3500 bis 1200 mPa·s. Das Kontaktieren des faserförmigen Materials mit dem härtbaren Gemisch kann weiterhin durch Imprägnieren von Geweben, Vliesen oder Endlosfasern mit einer bis zur Fliessfähigkeit erhitzten härtbaren Zusammensetzung, wie sie erfindungsgemäss eingesetzt werden soll, erfolgen, wobei die Gewebebahnen aus dem Fasermaterial beispielsweise ein Bad mit der heissen Zusammensetzung durchlaufen. Bei der Imprägnierung sollen die erfindungsgemässen Zusammensetzungen bevorzugt eine Viskosität von 1200 bis 200 mPa·s und beispielsweise Temperaturen zwischen 100 und 120 °C aufweisen. Ein bevorzugtes Verfahren dieser Art ist das Faserwickelverfahren, wie es unten in Beispiel 5 näher erläutert ist.

Bei der Verarbeitung kann die Temperatur der erfindungsgemässen Zusammensetzungen ohne weiteres auf weit über 100 °C erhöht werden, um die geforderte Viskosität von höchstens 3500 mPa·s bzw. eine Viskosität von bevorzugt höchstens 1200 mPa·s einzustellen. Solange die Temperatur unterhalb ca. 140 °C gehalten wird, besteht im allgemeinen keine Gefahr einer (teilweisen) vorzeitigen Härtung der Harzzusammensetzung, und man erhält nach der folgenden Abkühlung eine chemisch im wesentlichen noch in unveränderter Form vorliegende, bei Raumtemperatur trockene, kaum klebrige und feste Masse. Die genannte Abkühlung erfolgt bevorzugt auf Raumtemperatur, dh. auf ca. 10 bis 25 °C.

Da die erfindungsgemäss zur Herstellung von Prepregs eingesetzten härtbaren Zusammensetzungen empfindlich gegen UV-Strahlung sind, müssen sowohl das Kontaktieren als auch das Abkühlen unbedingt unter Ausschluss von UV-Strahlung erfolgen. Licht längerer Wellenlängen, z. B. Gelblicht, kann dagegen anwesend sein.

Das bei der Abkühlung erhaltene Prepregmaterial kann beispielsweise zu Rollen aufgerollt werden oder in einer beliebigen anderen Weise konfektioniert werden. Es kann in dieser Form unter UV-Ausschluss bei Raumtemperatur gewünschtenfalls monatelang, z. B. 5 bis 15 Monate lang oder noch länger gelagert werden, ohne dass seine Qualität leidet. Eine Lagerung im Kühlschrank ist selbstverständlich über einen noch längeren Zeitraum als bei Raumtemperatur möglich. Das Material kann aber auch sofort weiter verarbeitet werden.

Das erhaltene Prepregmaterial wird dazu der Wirkung von UV-Strahlung, bevorzugt einer Wellenlänge von 200 bis 450 nm, ausgesetzt, wodurch es in eine für die Härtung bei niedrigen Temperaturen aktivierte Form überführt wird. Als Lichtquellen eignen sich beispielsweise Xenonlampen, Argonlampen, Wolframlampen, Kohlelichtbögen, Metallhalogenid- und Metallichtbogenlampen, wie Niederdruck-, Mitteldruck- und Hochdruckquecksilberlampen oder auch Laser, wie Argon- oder Kryptonionen-Laser. Vorzugsweise wird die Bestrahlung mit Metallhalogenid- oder Hochdruckquecksilberlampen durchgeführt. Die Bestrahlungszeit hängt von verschiedenen Faktoren ab, einschliesslich z.B. dem polymerisierbaren organischen Material, der Art der Lichtquelle und deren Abstand vom bestrahlten Material. Die Bestrahlungszeit beträgt vorzugsweise 1 bis 120 Sekunden.

In der oben erwähnten aktivierten Form ist das Material immer noch einige Zeit lagerfähig, im allgemeinen 2 bis

7 Tage bei Raumtemperatur und 3 bis 5 Wochen im Kühlschrank.

Aus den aktivierten Prepregs können z. B. Verbundkörper bzw. Schichtpressstoffe oder Laminate hergestellt werden. Solche Verbundkörper können z. B. ebene Platten aber auch beliebig geformte Teile, wie Boote oder Bootsteile, Masten für Surfbretter, Ski, Tennisschläger oder Fahrradrahmen, sein.

Zur Herstellung der Verbundkörper wird eine Schicht des Prepregmaterials entweder auf eine weitere oder auf eine Schicht eines anderen geeigneten Materials gelegt, die beliebige Form aufweisen können, und dieser Vorgang so oft wie gewünscht wiederholt, so dass eine Schichtfolge aus den eingesetzten Materialien entsteht. Verbreitete Beispiele für weitere Materialien sind Kunststoff- oder Metallfolien, wie Kupfer- und Aluminiumfolien, oder weitere Verstärkungsmittel, wie Matten oder Vliese aus faserförmigen Verstärkungsmaterial.

Danach wird die Schichtfolge während 1 bis 60 Minuten bei einer Temperatur zwischen 50 und 140 °C verpresst, wonach der fertige Verbundkörper erhalten wird. Der Pressdruck liegt im allgemeinen zwischen 0,3 und 60 bar. Die genaue Abstimmung der Pressparameter ist, wie der Fachmann weiss, auch materialabhängig, und muss gegebenfalls optimiert werden.

Die Prepregs eignen sich gerade auch für die Verwendung niedriger und sehr niedriger Pressdrucke, z. B. 0,5 bis 20 bar, insbesondere 0,5 bis 10 bar. Pressdrucke unter 1 bar können aber in einfacher Weise auch an der gesamten Oberfläche unregelmässig geformter Werkstücke angelegt werden, beispielsweise dadurch, dass man ein geeignetes Presswerkzeug, wie einen flexiblen Hohlkörper, in dessen Inneres man das zu verpressende Werkstück gibt, von innen ganz oder teilweise evakuiert, so dass der Hohlkörper an die Oberfläche des Werkstücks anschmiegt und der äussere Luftdruck als Pressdruck auf das Werkstück einwirkt. Weiterhin kann z. B. kontinuierlich in Bandpressen oder auch in Etagenpressen (diskontinuierlich) verpresst werden. Bevorzugt erfolgt die Herstellung von Verbundkörpern während 10 bis 60, insbesondere 10 bis 20 Minuten bei einer Temperatur von 80 bis 120 °C, insbesondere 80 bis 100 °C.

Die Verbindungen mit einer oder mehr Carboxylgruppen, werden gemäss der vorliegenden Erfindung deshalb den Zusammensetzungen auf Basis von Epoxidharzen und Verbindungen der Formel I zugesetzt, weil sich gezeigt hat, dass solche Zusammensetzungen zwar häufig auch ohne die Anwesenheit dieser Verbindungen bei Temperaturen zwischen 60 und 140 °C bis zu einem gewissen Grad thermisch gehärtet werden können, bei Anwesenheit carboxylgruppenhaltiger Verbindungen diese Härtung bei gleichem Zeitaufwand aber zu einer Vernetzung von unerwartet höherem Ausmass führt, als das, das man während derselben Zeit erreicht, wenn die Carboxylverbindungen nicht vorhanden sind. Dies trifft insbesondere bei Zusammensetzungen zu, die einen sehr hohen Anteil an festen Epoxidharzen aufweisen. Die Verwendung von Verbindungen, die eine oder mehrere Carboxylgruppen aufweisen, zu dem oben geschilderten Zweck, d. h. als Zusatz zu Zusammensetzungen, die aus Epoxidharzen, insbesondere aus einem Gemisch flüssiger und fester Epoxidharze mit einem Anteil fester Epoxidharze von über 50 Gew.-%, bezogen auf das Gesamtgewicht der Epoxidharze, Verbindungen der Formel I in der oben beschriebenen Bedeutung und gegebenenfalls üblichen Zusatzstoffen bestehen, und zwar als Zusatz, der die thermische Vernetzung der mit UV-Strahlung belichteten Zusammensetzungen im Temperaturbereich von 60 bis 140 °C, insbesondere von 80 bis 100 °C, fördert, ist daher ebenfalls ein wesentlicher Teil der vorliegenden Erfindung. So zeigen Prepregs, die gemäss der Erfindung mit Hilfe von härtbaren Zusammensetzungen erhalten werden und carboxylgruppenhaltige Polyester enthalten, nach fünfzehnminütiger Erhitzung auf 100 °C im allgemeinen bereits einen Härtungsgrad von 90 % und mehr, während Prepregs auf Basis entsprechender Mischungen ohne die Polyester oder eine andere Carboxylverbindung nach 60 Minuten bei 100 °C erst Härtungsgrade im Bereich von 70 bis 80 % zeigen. Als Härtungsgrad gilt hierbei das Hundertfache der Differenz der mit Hilfe der Differential-Scanning-Kalorimetrie (DSC) bestimmten Reaktionsenthalpie, die beim Erhitzen einer völlig frischen Harzzusammensetzung oder eines völlig frischen Prepregs gemessen wird, und der Reaktionenthalpie, die bei einer gleichartigen Probe zu messen ist, die bereits einer Härtung unter den betrachteten Bedingungen unterzogen ist, bezogen auf die zuerst genannte Reaktionsenthalpie.

Die Verwendung niedrigmolekularer Carboxylverbindungen, z. B. von Verbindungen mit einem Äquivalentgewicht von 45 bis 250 g pro Carboxyläquivalent, insbesondere von 45 bis 100 g, hat hierbei den Vorteil, dass Förderung des Umsatzes bei der Härtung bereits mit einem geringen Zusatz der Carboxylverbindungen, z. B. mit 0,2 bis 10 Gew.-% erreicht werden kann. Hierbei ist die Verwendung von Milchsäure, Adipinsäure und Fumarsäure ganz besonders bevorzugt.

Die erfindungsgemässen Prepregs haben ausgezeichnete Klebeeigenschaften sowohl untereinander als auch auf anderen Materialien, insbesondere auf Metallen, wie Kupfer, Aluminium und Aluminiumlegierungen, oder auf Kunststoffen, besonders auf ABS, Phenol-Formaldehyd- und Melamin-Formaldehyd-Kondensationsprodukten, gehärteten Epoxidharzen und Kautschuk.

Die Glasübergangstemperatur ($T_G$), die gehärtete Prepregs zeigen, kann der Fachmann in geeignetem Rahmen steuern, z. B. durch die Auswahl geeigneter Epoxidharze. Um thermische Spannungen in einem Verbundkörper gering zu halten, ist es dabei in vielen Fällen günstig, eine möglichst niedrige, im Hinblick auf die zu erwartende thermische Belastung des Verbundkörpers aber noch ausreichende Glasübergangstemperatur anzustreben. Für Ski, Boots und Fahrradbau kann z. B. Prepregmaterial, das $T_G$-Werte bis hinunter zu 75 bis 80 °C liefert, gut eingesetzt werden, während für die Herstellung von Tennisschlägern Prepregmaterial für höhere $T_G$-Werte, z. B. 120 bis 140 °C, günstiger

sein kann.

Unerwarteterweise hat sich auch gezeigt, dass sogar Prepregmaterial auf Basis von Kohlefasern mit Hilfe von UV-Strahlung in so ausreichendem Masse aktiviert werden kann, dass eine Härtung bei den oben genannten Temperaturen möglich wird. Dies ist deshalb überraschend, weil Kohle UV-Strahlung praktisch vollständig absorbiert, also eine wesentlich unvollständigere Aktivierung als bei Verwendung UV durchlässigen Fasermaterials zu erwarten war. Bei einer speziellen Ausführungsform des erfindungsgemässen Verfahrens wird daher ein faserförmiges Material auf Basis von Kohlefasern eingesetzt, und es werden Prepregs erhalten, die bei einer Temperatur von 60 bis 140 °C, bevorzugt von 80 bis 120 °C, im wesentlichen vollständig ausgehärtet werden können.

Beispiel 1

53,9 Gewichtsteile (Ein Gewichtsteil entspricht im folgenden 1 g) Araldit® GT 7071 (festes Epoxidharz auf Basis von Bisphenol A mit einem Erweichungspunkt von 77 - 82 °C und einem Epoxidgehalt von 1,9 - 2,0 Äquivalenten pro Kilogramm) wird bei einer Temperatur von 120 - 130 °C in 34,3 Gewichtsteilen Araldit® LY 556 (flüssiges Epoxidharz auf Basis von Bisphenol A mit einem Epoxidgehalt von 5,25 - 5,40 Äquivalenten pro Kilogramm) gelöst und das Gemisch gut homogenisiert. Wenn alles gut homogenisiert ist, wird unter Rühren auf eine Temperatur von 90 °C abgekühlt, und es werden 9,8 Gewichtsteile eines carboxylterminierten Polyesters aus Polytetrahydrofuran (Zahlenmittel des Molekulargewichtes 1000), Neopentylglycol und Fumarsäure, der eine Viskosität von 26880 mPa·s (25 °C), eine Säurezahl von 63,3 mg KOH/g und ein Zahlenmittel des Molekulargewichtes von 4300 aufweist, zugegeben. Anschliessend werden in dem Gemisch bei einer Temperatur von 75 °C mittels eines Dispermaten unter Gelblicht 2 Gewichtsteile ($\eta^6$-Cumol)($\eta^5$-cyclopentadienyl) Fe-II-hexafluoroantimonat dispergiert.

Für die Viskosität dieser Mischung wurden folgende Werte gemessen:

| Temperatur [°C] | Viskosität [mPa·s] |
|---|---|
| 80 | 3360 |
| 100 | 1120 |
| 120 | 360 |

Ihr Erweichungspunkt beträgt 5,9 °C.

Die gleichen Ergebnisse werden auch erhalten, wenn man die Temperatur der Mischung während des ganzen oben beschriebenen Herstellungsprozesses nicht unter 120 °C absinken lässt.

Eine Glasgewebematte (Interglas IG 92146) wird bei Gelblicht mit der auf eine Temperatur von 100 bis 120 °C erwärmten Mischung imprägniert. Man erhält nach Abkühlung ein leicht klebriges, flexibles Prepreg mit einem Harzgehalt von ca. 30 bis 40 Gew.-%, das bei ca. 23 °C z. B. 15 Monate ohne Qualitätsverlust gelagert werden kann.

Das Prepreg wird mit einer 0,30 Meter entfernten UV-Lampe ("Staub" Metall-Halogenid-Kopierlampe ULTRALUX® 500 K) von 2000 Watt Leistung zweimal für 1 Minute belichtet. Das erhaltene aktivierte Prepreg ist bei 23 °C zumindest 2 Tage, bei 8 °C ca. 3 Wochen ohne Qualitätsverlust lagerfähig.

Die gleichen Ergebnisse werden erhalten, wenn die Belichtung mit einer entsprechenden Lampe von 200 Watt Leistung im Abstand von 0,10 Metern während zweimal 10 Minuten oder im Tageslicht hinter Fensterglas während zweimal 1 Stunde erfolgt.

Mit Hilfe einer Differential-Scanning-Kalorimeter-Messung (DSC) wird der Verlauf der thermischen Härtungsreaktion eines aktivierten Prepregs der oben genannten Zusammensetzung verfolgt. Für die Messung wird ein Mettler-Thermoanalysegerät TA 4000-TC 11 mit einer DSC Messzelle DSC 25 verwendet. Unter Gelblicht werden jeweils 10 bis 20 Milligramm einer frischen aktivierten Prepregprobe bzw. von aktivierten Prepregproben, die einer thermischen Härtung unter den jeweils angegebenen Bedingungen unterzogen sind, in ein DSC Messschälchen eingefüllt, die Schälchen jeweils verschlossen und mit einer Aufheizgeschwindigkeit von 10 °C pro Minute aufgeheizt. Das Gerät liefert jedes Mal automatisch die Temperatur beim Reaktionsmaximum und nach Integration des DSC-Peaks die Reaktionsenthalpie sowie gegebenenfalls die Glasumwandlungstemperaturen $T_{Go}$ (bei Beginn der Erweichung) und $T_G$ (Temperatur am Wendepunkt der Stufe). Aus der Differenz der Reaktionsenthalpie, die bei einer frischen Prepregprobe gemessen wird, und der Reaktionenthalpie, die bei einer Prepregprobe gemessen wird, die bereits einer bestimmten Härtung unterzogenen wurde, kann dann Härtungsgrad bestimmt werden, der bei einer Härtung unter diesen Bedingungen erreicht werden kann.

Es werden folgende Werte erhalten:

| | |
|---|---|
| Temperatur beim Reaktionsmaximum der frischen Prepregprobe | 101°C |

| Härtungsbedingungen | | $T_{Go}$/ | $T_G$ [°C] | Härtungsgrad [%] |
|---|---|---|---|---|
| 15 min | 100 °C | 73 | 80 | 95 |
| 60 min | 100 °C | 86 | 95 | 96 |

Man erkennt, dass bereits eine 15-minütige Härtung bei 100 °C praktisch vollständig ist.

Die nach diesem Beispiel erhaltenen Prepregs zeigen nach einer Härtung von 15 Minuten bei 100 °C eine Zugscherfestigkeit auf geschliffenen Aluminium von 11,4 $N/mm^2$ (bestimmt gemäss ISO 4587/79 bei 12,5 mm Überlappung).

Die Rollenschälfestigkeit nach einer Härtung von 20 Minuten (incl. Aufheizzeit) bei einer Temperatur von 100 °C, bestimmt gemäss ISO 4578/79, beträgt auf:

| | |
|---|---|
| Aluminium | 1,5 $N/mm^2$, |
| Kautschuk | 4,3 $N/mm^2$, |
| ABS | 0,7 $N/mm^2$, |
| PUR | 0,6 $N/mm^2$, |
| PE, lackiert | 3,8 $N/mm^2$. |

12 Lagen aus den beschriebenen Prepregs werden übereinandergelegt und zwischen Trennfolien in einer auf 100 °C angewärmten Presse 60 Minuten lang bis auf Anschlag an einem 3,2-Millimeter-Distanzrahmen zu einer Laminatplatte entsprechender Dicke verpresst. Die interlaminare Scherfestigkeit nach ASTM D 2344/84 beträgt bei dieser Platte 51,1±0,5 MPa.

Vergleichbare Ergebnisse können auch mit einer Zusammensetzung aus 59,5 Gewichtsteilen Araldit® GT 7071; 30 Gewichtsteilen Araldit® LY 556, 10 Gewichtsteilen des Polyesters aus Beispiel 1 und 0,5 Gewichtsteilen ($\eta^6$-Cumol) ($\eta^5$-cyclopentadienyl) Fe-II-hexafluoroantimonat erhalten werden.

Beispiele 2 bis 4

Wie in Beispiel 1 beschrieben und unter Verwendung der gleichen festen und flüssigen Epoxidharzkomponente und des gleichen UV-Aktivators ($\eta^6$-Cumol)($\eta^5$-cyclopentadienyl) Fe-II-hexafluoroantimonat wurden die in folgender Tabelle angegebenen Mischungen hergestellt.

| Beispiel | 2 | 3 | 4 |
|---|---|---|---|
| Gewichtsteile flüssiges Epoxidharz | 50 | 25 | 25 |
| Gewichtsteile festes Epoxidharz | 50 | 60 | 60 |
| Gewichtsteile UV-Aktivator | 2 | 2 | 2 |
| Gewichtsteile/Art Carboxylverbindung | 1/ Fumarsäure | 15/ Polyester A | 15/ Polyester B |
| Polyester A = Polyester aus Neopentylglycol und Adipinsäure im ungefähren | | | |

Molverhältnis 7 zu 8; Viskosität bei 25 °C: 18000 - 25000 mPa·s; 1,25 - 1,43 Säureäquivalente pro Kilogramm.

Polyester B = Polyester aus Polytetrahydrofuran (Zahlenmittel des Molekulargewichtes 1000), Neopentylglycol und Sebazinsäure; Viskosität bei 25 °C: 26880; Zahlenmittel des Molekulargewichtes: 4300; Säurezahl 6,2 Milligramm KOH pro Gramm Polyester.

Die folgenden Messwerte für die Temperatur beim Reaktionsmaximum, den Härtungsgrad, $T_{Go}$ und $T_G$, die interlaminare Scherfestigkeit, die Zugscherfestigkeit auf Aluminium und die Rollenschälfestigkeit ergeben sich gemäss den in Beispiel 1 verwendeten Vorschriften:

| Beispiel | 2 | 3 | 4 |
|---|---|---|---|
| Erweichungspunkt[°C] | 2,3 | 4,1 | - |
| Temperatur beim Reaktionsmaximum | 109 | 106 | 110 |
| Härtungsgrad [%]<br>15 min/100 °C<br>60 min/100 °C | <br>-<br>81 | <br>90<br>93 | <br>91<br>97 |
| $T_{Go}/T_G$ nach Härtung bei 60 min/100 °C [°C] | 83/91 | 70/75 | 66/74 |
| Interlaminare Scherfestigkeit [N/mm²] | 51,1±0,5 | 32,9±2,4 | 23,5 |
| Zugscherfestigkeit auf Aluminium [N/mm²] | - | 11,2 | 9,1 |
| Rollenschälfestigkeit [N/mm²] | 1,3±0,1 | - | - |

Beispiel 5: Herstellung trockener Prepreg-Rovings (Glasfaserstränge, die mit dem "Prepregharz" imprägniert sind).

a) 75 Gewichtsteile Araldit® GT 7071 (festes Epoxidharz auf Basis von Bisphenol A mit einem Erweichungspunkt von 77 - 82 °C und einem Epoxidgehalt von 1,9 - 2,0 Äquivalenten pro Kilogramm) wird bei einer Temperatur von etwa 120 °C in 15 Gewichtsteilen Araldit® LY 556 (flüssiges Epoxidharz auf Basis von Bisphenol A mit einem Epoxidgehalt von 5,25 - 5,40 Äquivalenten pro Kilogramm) gelöst und das Gemisch gut homogenisiert. Wenn alles gut homogenisiert ist, werden 10 Gewichtsteile eines carboxylterminierten Polyesters aus Polytetrahydrofuran (Zahlenmittel des Molekulargewichtes 1000), Neopentylglycol und Fumarsäure, der eine Viskosität von 26880 mPa·s (25 °C), eine Säurezahl von 63,3 mg KOH/g und ein Zahlenmittel des Molekulargewichtes von 4300 aufweist, zugegeben. Anschliessend werden in dem Gemisch unter Gelblicht 2 Gewichtsteile ($\eta^6$-Cumol)($\eta^5$-cyclopentadienyl) Fe-II-hexafluoroantimonat dispergiert.
Für die Viskosität dieser Mischung wurden folgende Werte gemessen:

| Temperatur [°C] | Viskosität [mPa·s] |
|---|---|
| 100 | 5120 |
| 120 | 1480 |
| 130 | 860 |
| 140 | 520 |

b) Die gesamte Imprägnierung des Glasfaserstranges erfolgt in einem Raum mit Gelblicht. Hierbei wird ein metallener doppelwandiger Trichter mit zirkulierendem heissen Öl auf ca. 140 °C beheizt. Der Trichter hat unten eine Austrittedüse von ca. 1 Millimeter Durchmesser, durch die der Glasfaserstrang hindurchgeführt wird. Etwa einen Meter unterhalb der Düse befindet sich eine Vorrichtung zum Aufwickeln des imprägnierten Stranges auf eine Kartonhülse. Die oben beschriebene Zusammensetzung wird abgekühlt, in Brocken zerschlagen und in dieser Form in den Trichter eingebracht. An den heissen Wänden des Trichters beginnt sie sofort zu schmelzen. Wenn sich über der Düse genügend Schmelze angesammelt hat, wird der Glasfaserstrang durch die Düse gezogen und auf die Kartonhülse aufgewickelt. Hierbei durchdringt das Harz den Faserstrang vollständig. Zwischen der Düse und der Aufwickelvorrichtung wird der Strang mit Hilfe zweier Kaltluftgebläse abgekühlt, so dass er trocken und klebfrei ist und einen Harzgehalt von 22,7 Gewichtsprozent aufweist. Man kann den imprägnierten Strang auch nach mehrwöchiger Lagerung bei Raumtemperatur problemlos wieder von der Kartonhülse abwickeln, ohne dass er dabei zerstört würde.

c) Herstellung eines Rohres nach dem Faserwickelverfahren mit Hilfe des oben beschriebenen imprägnierten Glasfaserstranges.

Der Wickeldorn (40 Millimeter Durchmesser) einer üblichen Faserwickelanlage wird auf 100 °C vorbeheizt. Anstelle

des üblichen Imprägnierbades weist die Faserwickelanlage eine Vorrichtung auf, mit der der imprägnierte Glasfaserstrang von der Kartonhülse abgewickelt werden kann. Zwischen dieser Abspulvorrichtung und dem heissen Dorn befindet sich ein Gehäuse mit einer Durchführung für den Faserstrang, in dessen Inneren eine Mitteldruck-Quecksilber-UV-Lampe und verschiedene Reflektoren so angeordnet sind, dass der Faserstrang von allen Seiten gleichmässig bestrahlt wird. Nun werden auf einer Länge von 30 Zentimetern vier Lagen des Faserstrangs übereinander aufgewikkelt. Hierbei wird die Imprägniermasse wieder flüssig, so dass nebeneinanderliegende Faserstränge verschmelzen. Der Wickelvorgang ist nach etwa zwei Minuten beendet und bereits nach kurzer Zeit beginnt das Harz auf dem heissen Dorn zu gelieren. Nach 30 Minuten wird der Dorn entfernt. Man erhält ein transparentes Rohr, dessen Glasumwandlungstemperatur 89 °C beträgt. Der Reaktionsumsatz beträgt 93 %.

Dieses Verfahren weist einige besondere Vorteile für den Anwender auf. So muss der Anwender nicht mehr unbedingt die Faserstränge selbst imprägnieren, wie es bisher üblich war, sondern er bezieht einfach das imprägnierte lagerfähige Fasermaterial von einem Hersteller. Es entstehen ihm keine Harzverluste wegen zu kurzer oder falsch eingeschätzter Topfzeiten und nicht gebrauchter Harzreste und es sind nur sehr kurze Härtungszeiten bei trotzdem relativ niedrigen Härtungstemperaturen erforderlich. Aber auch derjenige, der Fasermaterial für sich selbst oder zum Weitervertrieb imprägniert, hat Vorteile bei Verwendung der refindungsgemässen Zusammensetzungen, da diese im allgemeinen Einkomponentenmischungen sind und somit keine Mischfehler von Harz und Härter auftreten können, die zu Schwankungen der Eigenschaften des Prepregmaterials führen können.

## Patentansprüche

1. Härtbare Harzzusammensetzung mit weniger als 2 Gewichtsprozent an Lösungsmittel für die Herstellung von Prepregs, die einen Anteil von mehr als 45 Gewichtsprozent an zumindest bei Raumtemperatur festen Stoffen aufweist und die neben üblichen Zusatzstoffen aus festen Epoxidharzen oder einem Gemisch flüssiger und fester Epoxidharze, zumindest einer für UV-Strahlung empfindlichen Initiatorverbindung für die Polymerisation der Epoxidharze und zumindest einer weiteren Verbindung besteht, die eine oder mehrere Carboxylgruppen aufweist, wobei die Initiatorverbindung für die Polymerisation der Epoxidharze die Formel I aufweist:

$$[R^1(Fe^{II}R^2)_a]^{ab+}\ ab[X]^- \qquad (I)$$

worin a und b unabhängig voneinander 1 oder 2 sind, $R^1$ ein $\pi$-Aren ist, $R^2$ ein $\pi$-Aren, ein Indenylanion oder ein Cyclopentadienylanion bedeutet, $[X]^-$ ein Anion $[LQ_m]^-$ oder ein Anion einer teil- oder perfluorierten aliphatischen oder aromatischen Sulfonsäure ist L für B, P, As oder Sb steht, Q für F steht, wobei ein Teil der Reste Q auch Hydroxylgruppen sein können, und m der um Eins vergrösserten Wertigkeit von L entspricht, der Anteil fester Epoxidverbindungen, bezogen auf das Gesamtgewicht der Epoxidharze in der Zusammensetzung 50 Gewichtsprozent beträgt oder grösser als 50 Gewichtsprozent ist und die Zusammensetzung durch Erwärmung auf eine Temperatur im Bereich von 60 bis 140 °C unter UV-Ausschluss und, ohne dass ihr ein Lösungsmittel zugegeben wird, in einen Zustand überführbar ist in dem sie eine Viskosität von höchstens 3500 mPa.s aufweist, und die aus diesem Zustand durch Abkühlung bis höchstens zu Raumtemperatur und unter UV-Ausschluss in eine noch ungehärtete, bei Raumtemperatur klebfreie oder annähernd klebfreie, feste Masse mit einem Erweichungspunkt von minus 3 °C und höher überführbar ist.

2. Zusammensetzung nach Anspruch 1, die durch die Erwärmung auf eine Temperatur im Bereich von 60 bis 140 °C in einen Zustand iiberführbar ist, in dem sie eine Viskosität von 200 bis 3500 mPa·s aufweist.

3. Zusammensetzung nach einem der Ansprüche 1 oder 2, die insgesamt 60 bis 98 Gew.-% Epoxidharze enthält.

4. Zusammensetzung nach mindestens einem der Ansprüche 1 bis 3, die als flüssige Epoxidharze entweder Glycidylester enthält, oder Diglycidylether, die sich von 2,2-Bis-(4-hydroxyphenyl)-propan (Bisphenol A) oder von Bis-(4-hydroxyphenyl)-methan (Bisphenol F) herleiten.

5. Zusammensetzung nach mindestens einem der Ansprüche 1 bis 4, die als feste Epoxidharze Polyglycidylether enthält, die sich von 2,2-Bis-(4-hydroxyphenyl)-propan (Bisphenol A), Bis-(4-hydroxyphenyl)-methan (Bisphenol F) oder von Epoxynovolaken, insbesondere von Epoxyphenol- und Epoxycresolnovolaken, herleiten.

6. Zusammensetzung nach mindestens einem der Ansprüche 1 bis 5, die als Verbindung, die eine oder mehrere

Carboxylgruppen aufweist, Fumarsäure, Milchsäure und/oder Adipinsäure enthält.

**7.** Zusammensetzung nach mindestens einem der Ansprüche 1 bis 4, die als Verbindung, die eine oder mehrere Carboxylgruppen aufweist, mit durchschnittlich mindestens zwei Carboxylgruppen pro Molekül terminierte Polyester enthält.

**8.** Verfahren zur Herstellung von Prepregs, bei dem man eine Zusammensetzung nach Anspruch 1 unter Ausschluss von UV-Strahlung auf eine Temperatur erhitzt, die zwischen 60 und 140 °C liegt und mindestens so hoch ist, dass die Zusammensetzung eine Viskosität von höchstens 3500 mPa·s, bevorzugt von 1200 mPa·s aufweist, die Zusammensetzung unter weiterem UV-Ausschluss in diesem Zustand mit einem faserförmigen Material in innigen Kontakt bringt, das so behandelte Fasermaterial unter UV-Strahlungsausschluss zumindest auf eine Temperatur abkühlt, bei der die härtbare Mischung erstarrt, und das erhaltene Material danach entweder nach einer Zwischenlagerung unter UV-Ausschluss oder sofort durch Belichtung mit UV-Strahlung für eine thermische Härtung aktiviert.

**9.** Verfahren nach Anspruch 8, bei dem man als faserförmiges Material Kohlefasern einsetzt.

## Claims

**1.** A curable resin composition containing less than 2 per cent by weight of solvent for the fabrication of prepregs, which contains more than 45 per cent by weight of substances which are solid at ambient temperature at least, and which consists, in addition to customary additives, of solid epoxy resins or a mixture of liquid and solid epoxy resins, at least one initiator which is sensitive to UV radiation for the polymerisation of the epoxy resins and has the formula I

$$[R^1(Fe^{II}R^2)_a]^{ab+}\ ab[X]^- \qquad (I)$$

in which a and b are each independently of the other 1 or 2, $R^1$ is a $\pi$-arene, $R^2$ is a $\pi$-arene, an indenyl anion or a cyclopentadienyl anion, $[X]^-$ is an anion $[LQ_m]^-$ or the anion of a partially fluorinated or perfluorinated aliphatic or aromatic sulfonic acid, L is B, P, As or Sb, Q is F, with the proviso that some of the radicals Q may also be hydroxyl groups, and m is the valency of L increased by one, and at least one further compound which contains one or more carboxyl groups, and the content of solid epoxy compounds is 50 per cent by weight or more than 50 per cent by weight, based on the total weight of the epoxy resins in the composition, which composition, by heating to a temperature in the range from 60 to 140°C, excluding UV light and without the addition of a solvent, is convertible into a state in which it has a viscosity not higher than 3500 mPa·s, and, by cooling to a temperature not exceeding ambient temperature and excluding UV light, can be converted from this state into a solid mass which is still uncured which is tack-free or substantially tack-free at ambient temperature and which has a softening point of minus 3°C or more.

**2.** A composition according to claim 1, which is convertible by said heating to a temperature in the range from 60 to 140°C into a state in which it has a viscosity of from 200 to 3500 mPa·s.

**3.** A composition according to claim 1 or 2, which contains altogether from 60 to 98 % by weight of epoxy resins.

**4.** A composition according to at least one of claims 1 to 3, which contains as liquid epoxy resins either glycidyl esters or diglycidyl ethers which are derived from 2,2-bis(4-hydroxyphenyl)propane (bisphenol A) or from bis(4-hydroxyphenyl)methane (bisphenol F).

**5.** A composition according to at least one of claims 1 to 4, which contains as solid epoxy resins polyglycidyl ethers which are derived from 2,2-bis(4-hydroxyphenyl)propane (bisphenol A), bis(4-hydroxyphenyl)methane (bisphenol F) or from epoxy novolaks, especially from epoxy phenol and epoxy cresol novolaks.

**6.** A composition according to at least one of claims 1 to 5, which as the compound containing one or more carboxyl groups contains fumaric acid, lactic acid and/or adipic acid.

**7.** A composition according to at least one of claims 1 to 4, which as the compound containing one or more carboxyl

groups contains polyesters terminated with on average at least two carboxyl groups per molecule.

**8.** A process for the fabrication of prepregs, in which a composition according to claim 1 is heated, excluding UV light, to a temperature which is between 60 and 140°C and is at least sufficiently high that the composition has a viscosity not higher than 3500 mPa·s, preferably 1200 mPa·s, the composition is brought into intimate contact in this state with a fibrous material, still excluding UV light, the fibre material thus treated is cooled, excluding UV light, at least to a temperature at which the curable mixture solidifies, and the material obtained is activated for a thermal cure either after initial storage, excluding UV light, or immediately by exposure to UV radiation.

**9.** A process according to claim 8, in which the fibrous material employed comprises carbon fibres.

**Revendications**

**1.** Composition de résine durcissable ayant une teneur en solvant inférieure à 2 % en poids pour la préparation de prépregs, composition qui présente un taux supérieur à 45 % en poids de matières solides à la température ambiante et qui contient, au côté des additifs usuels en résines époxydes ou d'un mélange de résines époxydes solides et liquides, au moins un composé amorceur sensible au rayonnement UV pour la polymérisation des résines époxydes et au moins un autre composé qui présente un ou plusieurs groupes carboxyle, le composé amorceur pour la polymérisation des résines époxydes répond à la formule I

$$[R^1 (Fe^{II} R^2)_a]^{ab\oplus} \; ab\bullet [X]^{\ominus} \qquad (I)$$

dans laquelle a et b, indépendamment l'un de l'autre, valent 1 ou 2, $R^1$ est un π-arène, $R^2$ est un π-arène, un anion indényle ou un anion cyclopentadiényle, $[X]^{\ominus}$ est un anion $[LQ_m]^{\ominus}$ ou un anion d'un acide sulfonique aliphatique ou aromatique partiellement fluoré ou perfluoré, L représente B, P, As ou Sb, Q représente F, une partie du reste Q pouvant aussi être des groupes hydroxyle, et m correspondant à la valence de L augmentée de 1, le taux en composés époxydes solides par rapport au poids total des résines époxydes dans la composition étant de 50 % en poids ou plus de 50 % en poids, et par chauffage à une température dans l'intervalle de 60 à 140 °C, à l'abri des rayons UV et sans ajouter de solvant, la composition étant transformable en un état dans lequel elle présente une viscosité maximale de 3500 mPa.s et que l'on peut transformer de cette étape par refroidissement à une température maximale équivalente à la température ambiante et à l'abri des rayons UV en une masse solide, encore non durcie, hors poisse ou pratiquement hors poisse à la température ambiante, ayant un point de ramollissement de -3 °C ou plus.

**2.** Composition selon la revendication 1 que l'on peut transformer par chauffage à une température dans l'intervalle de 60 à 140 °C à un état, dans lequel elle présente une viscosité de 200 à 3500 mPa.s.

**3.** Composition selon l'une des revendications 1 ou 2, qui contient au total de 60 à 98 % en poids de résine époxyde.

**4.** Composition selon au moins l'une des revendications 1 à 3, qui contient comme résines époxydes liquides soit des esters glycidyliques, soit des éthers diglycidyliques, qui dérivent du 2,2-bis-(4-hydroxyphényl)-propane (bisphénol A) ou du bis-(4-hydroxyphényl)-méthane (bisphénol F).

**5.** Composition selon au moins l'une des revendications 1 à 4, qui contient comme résines époxydes solides des éthers polyglycidyliques qui dérivent du 2,2-bis-(4-hydroxyphényl)-propane (bisphénol A), du bis-(4-hydroxyphényl)-méthane (bisphénol F) ou des époxy-novolaques, plus particulièrement des époxyphénol-novolaques et des époxycrésol-novolaques.

**6.** Composition selon au moins l'une des revendications 1 à 5, qui contient, comme composé présentant un ou plusieurs groupes carboxyle, l'acide fumarique, l'acide lactique et/ou l'acide adipique.

**7.** Composition selon au moins l'une des revendications 1 à 4, qui contient, comme composé présentant un ou plusieurs groupes carboxyle, des polyesters qui contiennent en moyenne au moins deux groupes carboxyle terminaux par molécule.

**8.** Procédé pour la préparation de prépregs dans lequel on chauffe une composition selon la revendication 1 à l'abri de la lumière UV à une température comprise entre 60 et 140 °C et qui est au moins tellement élevée, que la composition présente une viscosité maximale de 3500 mPa.s, de préférence de 1200 mPa.s, la composition étant en cet état mise en contact intime, toujours à l'abri de la lumière UV, avec une matière fibreuse, la matière fibreuse ainsi traitée, toujours à l'abri des rayons UV, est refroidie à une température au moins telle que le mélange durcissable se solidifie et que la matière obtenue soit activée pour un durcissement thermique soit après un stockage intermédiaire à l'abri des rayons UV, soit immédiatement après irradiation par des rayons UV.

**9.** Procédé selon la revendication 8, dans lequel on utilise des fibres de carbone en tant que matière fibreuse.